# EUROPÄISCHE PATENTSCHRIFT

(11) **EP 0 722 814 B1**
(45) Veröffentlichungstag und Bekanntmachung des Hinweises auf die Patenterteilung: **03.05.2000**
(21) Anmeldenummer: 95116008.4
(22) Anmeldetag: 11.10.1995
(51) Int. Cl.: B28B 11/14, B28B 13/04, B23D 53/04, B26D 7/06, B26D 7/20

(54) **Anlage zum Herstellen von Steinformlingen, insbesondere Steinformlingen aus Kalksandstein, für die Baustein-Industrie**
Plant for making green bricks, in particular green bricks from sand and lime, for the building stones industry
Dispositif de fabrication de briques crues, en particulier de briques crues à partir de sable et de chaux, pour l'industrie des pierres de construction

(30) Priorität: 21.01.1995 DE 19501812
(43) Veröffentlichungstag der Anmeldung: 24.07.1996
(73) Patentinhaber: DORSTENER MASCHINENFABRIK AKTIENGESELLSCHAFT, D-46284 Dorsten (DE)
(72) Erfinder: Schulz, Eckhard, D-46284 Dorsten (DE); Lütkenhorst, Günter, D-46282 Dorsten (DE); Röken, Bernhard, D-46284 Dorsten (DE)
(74) Vertreter: Honke, Manfred, Dr.-Ing.

(56) Entgegenhaltungen:
- DE-A- 2 053 084
- DE-A- 2 120 595
- DE-A- 2 421 192
- DE-A- 3 508 235
- DE-B- 1 078 037
- DE-B- 1 134 618
- FR-A- 2 111 813
- FR-A- 2 680 999
- GB-A- 1 249 294
- US-A- 4 111 085

## Beschreibung

Die Erfindung betrifft eine Anlage zum Herstellen von Steinformlingen, insbesondere Steinformlingen aus Kalksandstein, für die Baustein-Industrie (siehe z.B. die DE-A-2053084).

Für die Baustein-Industrie und insbesondere Kalkstein-Industrie müssen Steine in den verschiedenstens Formaten hergestellt werden. Dazu finden Formpressen mit geeigneten Formwerkzeugen Verwendung, um Steinrohlinge herzustellen. Diese Steinrohlinge werden regelmäßig mit Hilfe eines Steinsetzautomaten auf einen Härtewagen aufgesetzt bzw. gestapelt und anschließend in einen Autoklaven verfahren und dort einem Härteprozeß unterzogen. Die gehärteten Kalksandsteine müssen dann in Abhängigkeit von dem jeweiligen Bauvorhaben und Architektenvorgaben auf Maß geschnitten werden. Um die auftragsgebundenen Schnitte durchführen zu können, finden Steinschneidemaschinen Verwendung. Das Schneiden der gehärteten Kalksandsteine ist aus mehreren Gründen problematisch, nämlich infolge von Silikatbildung. Das Silikat erschwert den Schneidvorgang selbst ganz erheblich, der regelmäßig nur unter Kühlwasserzufuhr durchgeführt werden kann. Hinzu kommt, daß aus dem wassergekühlten Schneiden der Kalksandsteine erheblicher Silikatschlamm resultiert, der eingedickt und entsorgt werden muß. Das alles ist verhältnismäßig aufwendig. - Hier will die Erfindung Abhilfe schaffen.

Der Erfindung liegt die Aufgabe zugrunde, eine Anlage anzugeben, womit sich Steinformlinge und insbesondere Steinformlinge aus Kalksandstein in rationeller Weise herstellen lassen. Darüber hinaus soll eine Anlage zur Durchführung des Verfahrens geschaffen werden, die sich durch ihren funktionsgerechten Aufbau auszeichnet und vollautomatisch arbeiten kann.

Diese Aufgabe löst die Erfindung durch die Merkmale des Anspruchs 1. Im Rahmen der Erfindung werden die in einer Formpresse erzeugten Steinrohlinge unmittelbar einer Bandsäge und von der Bandsäge unmittelbar einer Härteanlage zugeführt. Unmittelbar meint ohne Zwischenbehandlung. - Die Erfindung geht von der Erkenntnis aus, daß sich bereits die Steinrohlinge auf Maß schneiden lassen, nämlich mittels einer Bandsäge. Dadurch wird der Schneidvorgang ganz erheblich erleichtert. Hinzu kommt, daß keine entsorgungsbedürftigen Abfälle entstehen. Sofern Verschnitt beim Sägen der Steinrohlinge anfällt, kann dieser Verschnitt der Formpresse zugeführt und erneut verarbeitet werden. Darüber hinaus ist ein staubfreier Sägeprozeß gewährleistet, der ohne Wasserkühlung auskommt. Im Ergebnis lassen sich im Rahmen des erfindungsgemäßen Verfahrens Steinformlinge aus Steinrohlingen in besonders rationeller und wirtschaftlicher Weise herstellen, die erst - nachdem sie auf Format geschnitten worden sind - auf einen Härtewagen aufgesetzt und dem Härteprozeß in einem Autoklaven zugeführt werden.

Bei der erfindungsgemäßen Anlage lassen sich die aus der Formpresse kommenden Steinrohlinge oder andere Steinformlinge, nach ihrer Dicke sortiert, auf einer mehrspurigen Transportstraße zu der Bandsägemaschine hinführen und nach dem Sägeprozeß in Abhängigkeit von den geschnittenen Steinformaten kommissionieren und anschließend härten. Nach einem Vorschlag der Erfindung, dem selbständige Bedeutung zukommt, ist vorgesehen, daß die Bandsägemaschine eine horizontale Bandsäge aufweist und quer zu einem unterhalb der Bandsäge angeordneten Förderer für die Steinrohlinge bzw. -formlinge angeordnet ist, daß die Bandsäge heb- und senkbar, z. B. an einer Traverse aufgehängt ist, daß die Bandsäge um eine Vertikalachse drehbar gelagert ist, daß die Bandsäge um eine quer zum Förderer verlaufende Schwenkachse in Längsrichtung des Förderers schwenkbar gelagert ist, und daß die Bandsäge in Längsrichtung des Förderers verfahrbar ist. Diese erfindungsgemäßen Maßnahmen haben zur Folge, daß sich die Steinrohlinge oder -formlinge bei vorgegebener Steindicke auf maßgerechte Länge, Gehrung und Schräge schneiden lassen. Dabei garantiert die Bandsäge überraschenderweise ein exaktes Durchschneiden der Steinrohlinge bzw. -formlinge ohne jede Kantenbeschädigung, obwohl zumindest die Steinrohlinge noch weich sind. Weiter sieht die Erfindung vor, daß die Bandsäge in einem Hubschlitten angeordnet ist, daß der Hubschlitten beidseitig in Vertikalführungen geführt ist, und daß der Hubschlitten mittels Hubzylinder an die Traverse angeschlossen ist, so daß ein stets genauer Sägehub gewährleistet ist. Die Vertikalführungen können an der Traverse befestigt sein. - Weiter lehrt die Erfindung, daß die Bandsägemaschine in einer Brückenkonstruktion mit einem Brückengestell mit beidseitig des Förderers in Fördererlängsrichtung verlaufenden Führungsschienen und einem auf den Führungsschienen verfahrbaren Brückenrahmen aufgehängt ist, daß der Brückenrahmen einen um eine Vertikalachse der Bandsäge arbeitenden Drehantrieb für einen unterhalb des Brückenrahmens angeordneten Brückenträger aufweist, daß der Brückenträger einen Schwenkantrieb für die um ihre Längsachse schwenkbar gelagerte Traverse aufweist, und daß die Traverse an ihren beiden Enden in Lagerwangen des Brückenträgers schwenkbar und mit dem Brückenträger um die durch die Bandsäge führende Vertikalachse drehbar gelagert ist. Diese Brückenkonstruktion ermöglicht in einfacher und funktionsgerechter Weise sämtliche Bewegungsabläufe für die Bandsäge, um die Steinrohlinge bzw. -formlinge auf Länge, Gehrung und Schräge sägen zu können, und zwar unter Berücksichtigung eines programmierbaren Sägeprozesses. Die Sägeprogramme, für die nach Art und Menge unterschiedlichen Steinformate werden regelmäßig von Architekten zur Verfügung gestellt, welche betreffende Bauprojekte betreuen. - Vorzugsweise arbeitet der Drehantrieb unter Zwischenschaltung eines Getriebes, zum Beispiel Zahnradgetriebes auf den Brückenträger, während der Schwenkantrieb unter Zwischenschaltung eines Getriebes, zum Beispiel Zahnradgetriebes auf die Traverse arbeitet und darüber auf die Bandsäge.

Nach einem weiteren Vorschlag der Erfindung mit selbständiger Bedeutung ist vorgesehen, daß der Förderer als Stabförderer mit in vorgegebenen Abständen quer zur Förderrichtung angeordneten und an Förderketten federnd abgestützten Ladestäben ausgebildet ist, und daß im Bereich der Bandsäge beidseitig des Stabförderers programmgesteuerte Niederhalter für die betreffenden Ladestäbe vorgesehen sind, welche die mit einem Steinrohling oder -formling beladenen Ladestäbe im Sägebereich um ein die Schnittiefe des Sägebandes übersteigendes Maß aus der Ladeebene des Strebförderers herabziehen und nach dem Sägevorgang wieder freigeben. Diese Maßnahmen der Erfindung haben zur Folge, daß das Sägeband die Steinrohlinge bzw. -formlinge tatsächlich ungestört völlig durchschneiden kann, weil eben die den betreffenden Steinrohling bzw. -formling tragenden Ladestäbe im Sägebereich von den Niederhaltern bis nach Beendigung des Sägeprozesses unter die Hubtiefe des Sägebandes herabgezogen werden. Die Betätigung der Niederhalter ist wie der Sägeprozess programmgesteuert. Im einzelnen können die Förderketten als Laschenketten ausgebildet sein, wobei die Ladestäbe unter Zwischenschaltung von vertikal ausgerichteten Rückstellfedern auf seitlich an die Laschenketten angeschlossenen Lagerkonsolen, zum Beispiel Lagerwinkeln, abgestützt sind. Diese Rückstellfedern gewährleisten die Rückstellung der Ladestäbe auf Ladeebene nach Freigabe durch die Niederhalter. Die Niederhalter sind zweckmäßigerweise als vertikal ausgerichtete Zylinderkolbenanordnungen ausgebildet, deren Kolbenstangen einen die betreffenden Ladestäbe endseitig übergreifenden Mitnehmer aufweisen. Ferner können die Niederhalter außenseitig der Laschenketten angeordnet sein, und gegen die Laschenketten sowie Ladestabenden programmgesteuert verfahrbar sein. Die Ladestabenden weisen vorzugsweise Aussparungen zum Eingreifen der Mitnehmer bei vorgefahrenen Niederhaltern auf. Als besonders günstig hat sich ein Teilungverhältnis von Kettenteilung zur Ladestabteilung von 3/2 herausgestellt. Bei einem solchen Teilungsverhältnis werden sämtliche Ladestäbe im Sägebereich während des Sägeprozesses herabgezogen, welche die vorkommenden Längenschnitte, Gehrungsschnitte und Schrägschnitte beim völligen Durchsägen der Steinrohlinge bzw. -formlinge verlangen.

Weiter sieht die Erfindung vor, daß die Übergabevorrichtungen als heb- und senkbare sowie gegebenenfalls um ihre Vertikalachse drehbar gelagerte Greifer ausgebildet sind, und daß die Greifer über den Stabförderer und die benachbarten Transportstraßen verfahrbar sind. Die Greifer können außerdem um eine Horizontalachse verschwenkbar aufgehängt sein. Nach einem Vorschlag der Erfindung mit selbständiger Bedeutung ist vorgesehen, daß der der Bandsägemaschine nachgeordnete Greifer Greiferwangen mit in einem vorgegebenen Raster angeordneten Griefzylindern aufweist, daß die in Greifrichtung vorfahrbaren Kolbenstangen der in orthogonaler Ausrichtung an den Greiferwangen befestigten Greifzylindern auf der Wangeninnenseite mit Greiftellern bestückt sind und daß die Greifzylinder programmgesteuert und wahlweise aktivierbar bzw. deaktivierbar sind. - Durch diese erfindungsgemäßen Maßnahmen wird erreicht, daß sich einerseits jedes Rohlingformat bzw. Formlingformat unter Berücksichtigung der jeweiligen Längsschnitte, Gehrungsschnitte und Schrägschnitte einwandfrei ergreifen und abtransportieren läßt, andererseits die auf Maß gesägten Steinrohlinge bzw. -formlinge in kantenschonender Weise ergriffen werden können, weil sich jene Greifzylinder deaktivieren lassen, die sich im Kantenbereich dieser Steinrohlinge bzw. -formlinge befinden. Im übrigen werden selbstverständlich nur solche Greifzylinder aktiviert, welche zum Ergreifen der betreffenden Steinrohlinge bzw. -formlinge in Abhängigkeit von ihrem Formaten erforderlich sind. Um eine Grobeinstellung im Zuge des Greifvorganges zu gewährleisten, sind die Greiferwangen zweckmäßigerweise in einem Greiferrahmen gelagert und gegeneinander verfahrbar bzw. zusammenfahrbar. Erst nach dem Zusammenfahren der Greiferwangen um ein vorgegebenes Grobmaß werden die in Frage kommenden Greifzylinder aktiviert, um mittels der Greifteller den weiligen Steinrohling bzw. -formling zu erfassen.

Im folgenden wird die Erfindung anhand einer lediglich ein Ausführungsbeispiel darstellenden Zeichnung näher erläutert; es zeigen:

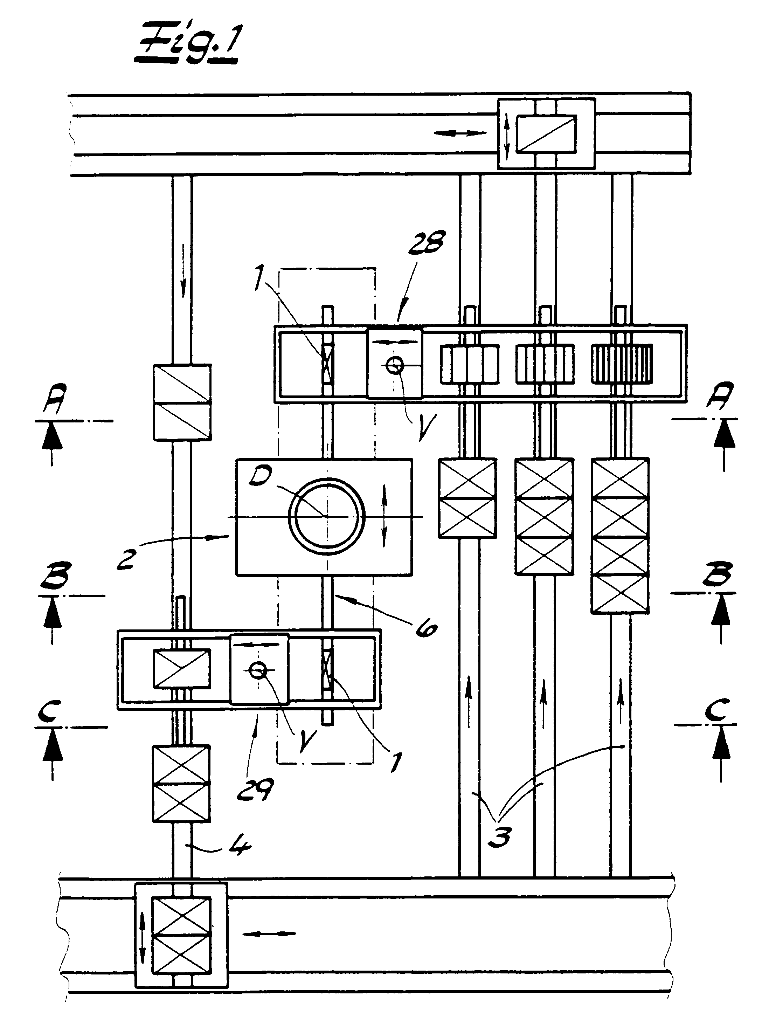

- Fig. 1: eine Anlage zum Herstellen von maßgerechten Steinrohlingen aus Kalksandstein und Steinformlingen aus Porenbeton in schematischer Aufsicht,
- Fig. 2: einen Schnitt AA durch den Gegenstand nach Fig. 1,
- Fig. 3: einen Schnitt BB durch den Gegenstand nach Fig. 1,

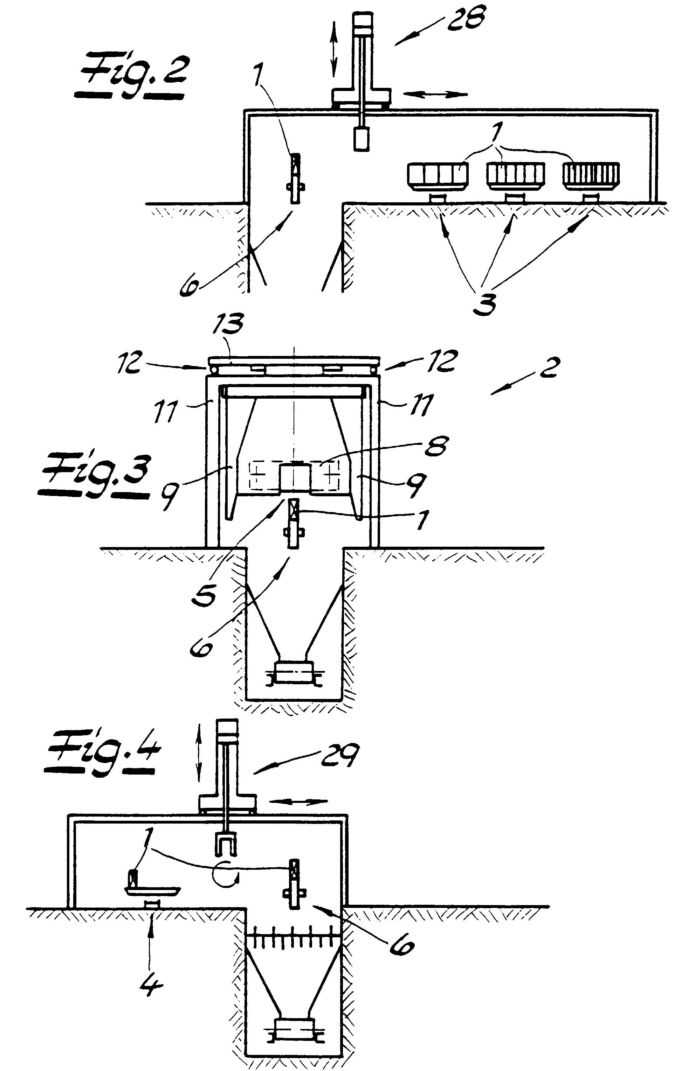

- Fig. 4: einen Schnitt CC durch den Gegenstand nach Fig. 1,

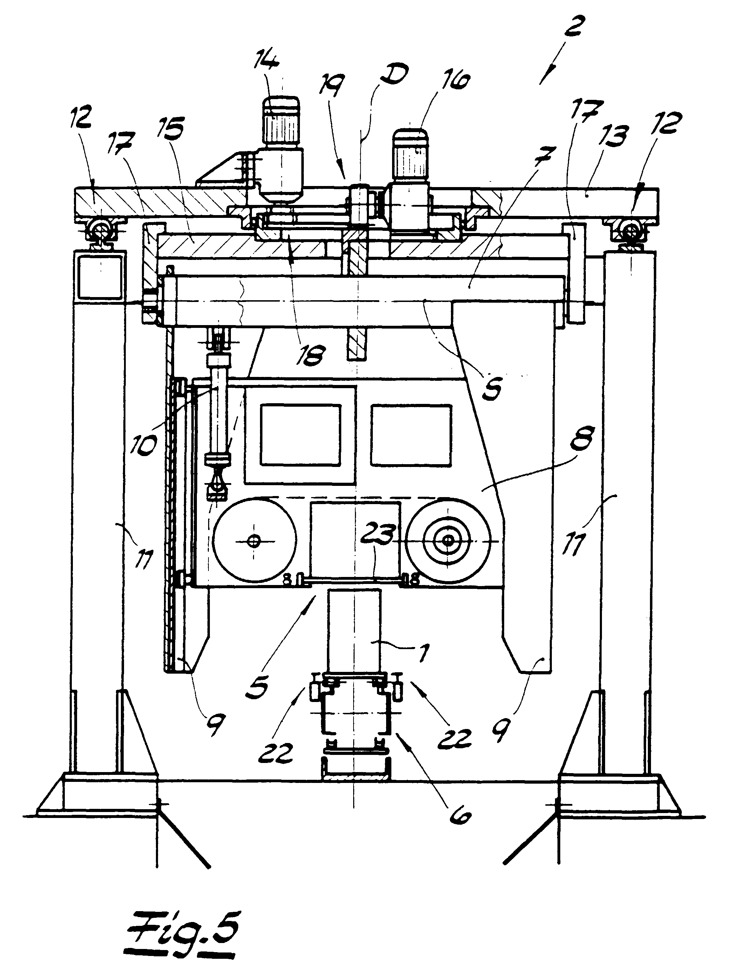

- Fig. 5: einen vergrößerten Ausschnitt aus dem Gegenstand nach Fig. 3 im Bereich der Bandsägemaschine,

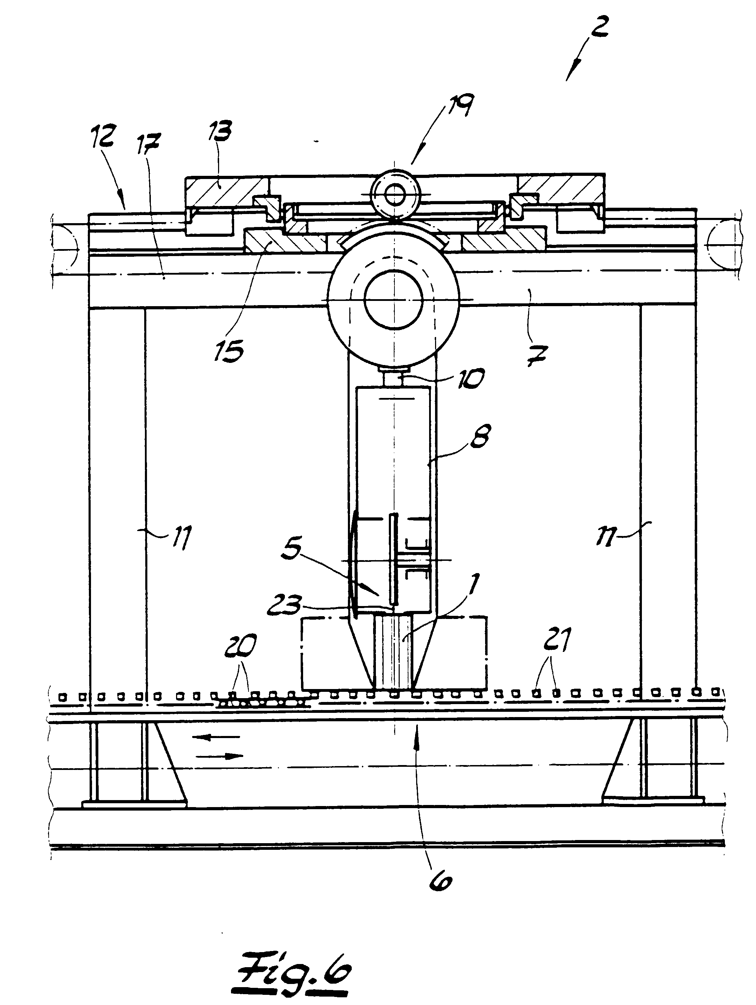

- Fig. 6: eine Seitenansicht auf den Gegenstand nach Fig. 5 und teilweise im Vertikalschnitt,

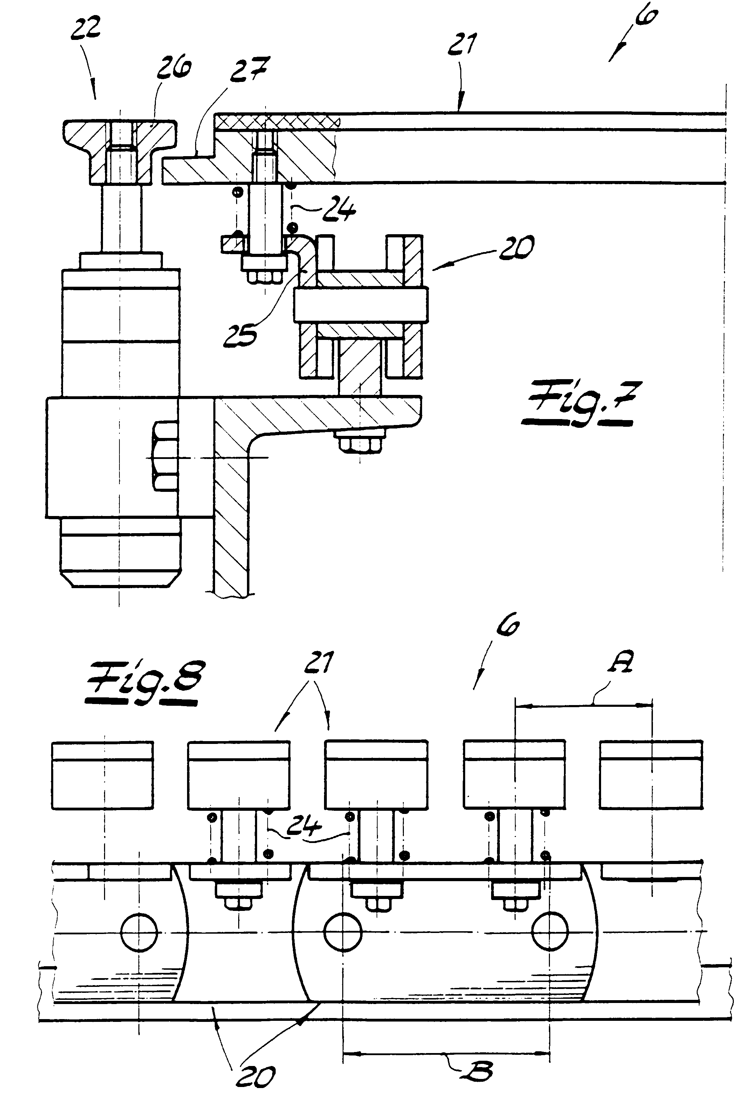

- Fig. 7: einen hälftigen Vertikalschnitt durch den Stabförderer für die Bandsägemaschine,
- Fig. 8: den Gegenstand nach Fig. 7 in teilweiser Seitenansicht ohne Niederhalter,

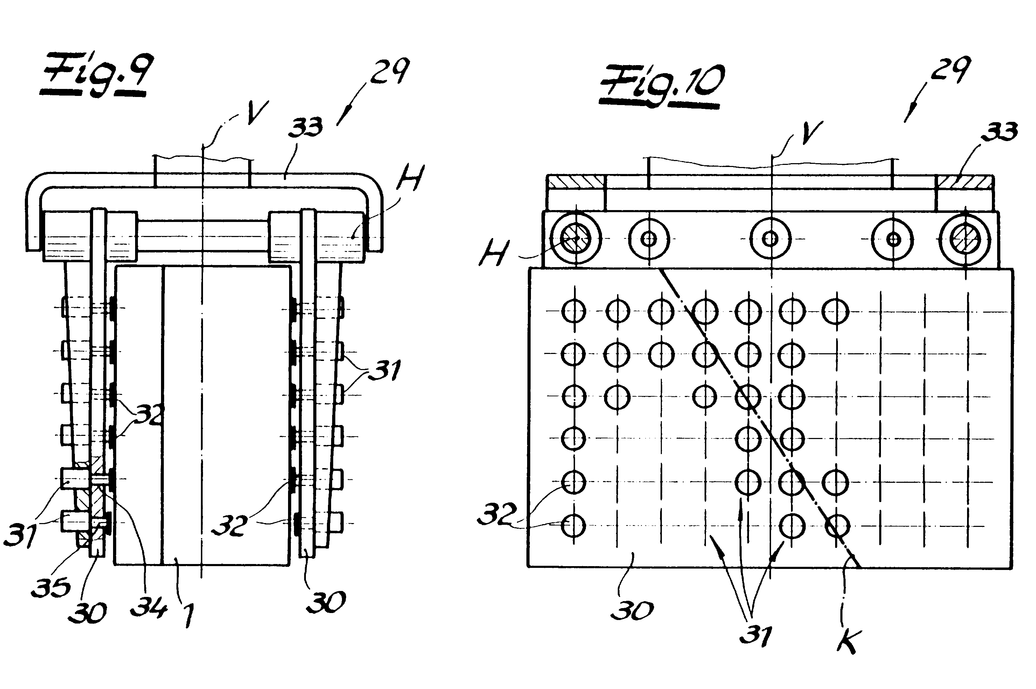

- Fig. 9: den der Bandsägemaschine nachgeordneten Greifer in Stirnansicht,

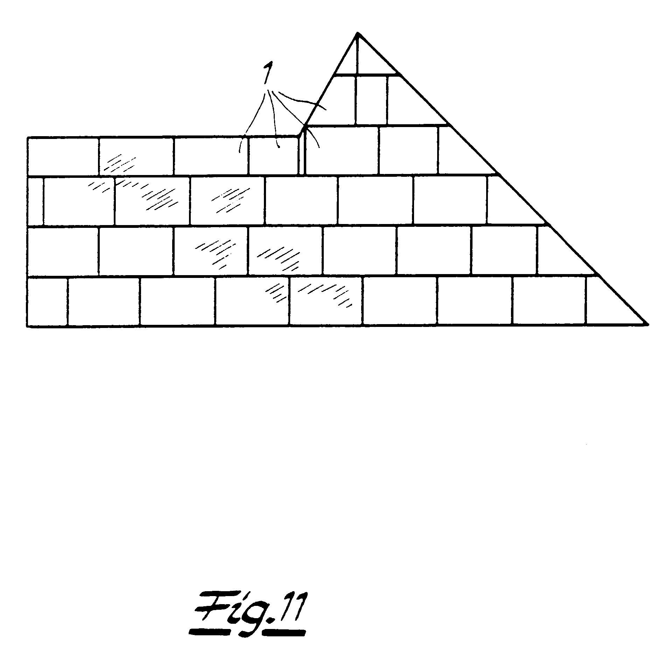

- Fig. 10: den Gegenstand nach Fig. 9 in Seitenansicht mit andeutungsweise einem schräggeschnittenen Steinrohling und
- Fig. 11: ein mögliches Steinprogramm mit verschiedenen Steinformaten.

In den Figuren ist eine Anlage zum Herstellen von Steinformlingen, insbesondere Steinformlingen aus Kalksandstein, dargestellt, mit welcher die Steinformlinge als Steinrohlinge 1 auf Maß gesägt und anschließend gehärtet werden. Diese Anlage, die auch zum Herstellen von maßgerechten Steinen aus Porenbeton geeignet ist, weist eine Bandsägemaschine 2 für die Steinrohlinge 1 auf. Zu dieser Bandsägemaschine 2 führen eine oder mehrere Transportstraßen 3 hin, um die nach Dicke sortierten Steinrohlinge 1 gleichsam chargenweise dem Sägeprozeß zuzuführen. Von der Bandsägemaschine 2 führen eine oder mehrere Transportstraßen 4 fort, um die auf Maß geschnittenen Steinrohlinge 1 abzutransportieren und dem Härteprozeß zuzuführen. Die Bandsägemaschine 2 weist eine horizontale Bandsäge 5 auf, welche quer zu einem unterhalb der Bandsäge 5 angeordneten Förderer 6 für die Steinrohlinge 1 angeordnet ist. Die Bandsäge 5 ist heb- und senkbar an einer Traverse 7 aufgehängt. Außerdem ist die Bandsäge um eine Vertikalachse D drehbar gelagert und um eine quer zum Förderer 6 verlaufende Schwenkachse S in Längsrichtung des Förderers schwenkbar gelagert. Mit der heb- und senkbaren Bandsäge 5 lassen sich die Steinrohlinge 1 auf Länge schneiden, die drehbare Lagerung der Bandsäge 5 ermöglicht Gehrungsschnitte, während die schwenkbare Lagerung der Bandsäge Schrägschnitte möglich macht. Darüber hinaus ist die Bandsäge 5 in Längsrichtung des Förderers 6 verfahrbar, um eine entsprechende Positionierung für den Sägeprozeß zu ermöglichen. Die Bandsäge 5 ist in einem kastenförmigen Hubschlitten 8 angeordnet, wobei der Hubschlitten 8 beidseitig in Vertikalführungen 9 geführt und mittels Hubzylindern 10 an die Traverse 7 angeschlossen ist. Die Vertikalführungen 9 sind an der Traverse 7 befestigt. - Die Bandsägemaschine 2 ist in einer Brückenkonstruktion mit einem Brückengestell 11 mit beidseitig des Förderers 6 in Fördererlängsrichtung verlaufenden Führungsschienen 12 und einem auf den Führungsschienen 12 verfahrbaren Brückenrahmen 13 aufgehängt. Der Antrieb für den Brückenrahmen 13 ist lediglich angedeutet. Der Brückenrahmen 13 weist einen um eine Vertikalachse D der Bandsäge 5 arbeitenden Drehantrieb 14 für einen unterhalb des Brückenrahmens 13 angeordneten Brückenträger 15 auf. Der Brückenträger 15 weist einen Schwenkantrieb 16 für die um ihre Längsachse schwenkbar gelagerte Traverse 7 auf. Die Traverse 7 ist an ihren beiden Enden in Lagerwangen 17 des Brückenträgers 15 schwenkbar und mit dem Brückenträger 15 um die durch die Bandsäge 5 führende Vertikalachse D drehbar gelagert. Der Drehantrieb 14 arbeitet unter Zwischenschaltung eines Zahnradgetriebes 18 auf den Brückenträger 15. Der Schwenkantrieb 16 arbeitet unter Zwischenschaltung eines Zahnradgetriebes 19 auf die Traverse.

Der Förderer 6 ist als Stabförderer mit den vorgegebenen Abständen quer zur Förderrichtung angeordneten und an Förderketten 20 federnd abgestützten Ladestäben 21 ausgebildet. Im Bereich der Bandsäge 5 sind beidseitig des Stabförderers 6 programmgesteuerte Niederhalter 22 für die betreffenden Ladestäbe 21 vorgesehen, welche die mit einem Steinrohling 1 beladenen Ladestäbe 21 im Sägebereich um ein die Schnittiefe des Sägebandes 23 übersteigendes Maß aus der Ladeebene des Stabförderers 6 herabzuziehen bzw. absenken und nach dem Sägevorgang wieder freigeben. Die Förderketten sind als Laschenketten 20 ausgebildet. Die Ladestäbe 21 sind unter Zwischenschaltung von vertikal ausgerichteten Rückstellfedern 24 auf seitlich an die Laschenketten 20 angeschlossenen Lagerkonsolen, z. B. Lagerwinkeln 25 abgestützt. Die Niederhalter 22 sind als vertikal ausgerichtete Zylinderkolbenanordnungen ausgebildet, deren Kolbenstangen einen die betreffenden Ladestäbe 21 über endseitig übergreifenden Mitnehmer 26 aufweisen. Die Niederhalter 22 sind außenseitig der Laschenketten 20 angeordnet und gegen die Laschenketten 20 sowie Ladestabenden verfahrbar. Die Ladestabenden weisen Aussparungen 27 zum Eingreifen der Mitnehmer 26 bei vorgefahrenen Niederhaltern 22 auf. Das Teilungsverhältnis von Kettenteilung zu Ladestabteilung beträgt B zu A 3/2, kann aber auch anders gewählt werden.

Die Übergabevorrichtungen sind als heb- und senkbare sowie gegebenenfalls um ihre Vertikalachse V drehbar gelagerte Greifer 28, 29 ausgebildet. Die Greifer 28, 29 sind über den Stabförderer 6 und die benachbarten Transportstraßen 3, 4 verfahrbar. Außerdem können die Greifer 28, 29 um eine Horizontalachse H verschwenkbar aufgehängt sein. - Zumindest der der Bandsägemaschine 2 nachgeordnete Greifer 29 weist Greiferwangen 30 mit in einem vorgegebenen Raster angeordneten Greifzylindern 31 auf. Die in Greifrichtung vorfahrbaren Kolbenstangen der in orthogonaler Ausrichtung an den Greiferwangen 30 befestigten Greifzylinder 31 sind auf der Wangeninnenseite mit Greiftellern 32 bestückt. Die Greifzylindern 31 sind programmgesteuert und wahlweise aktivierbar bzw. deaktivierbar. Nach dem Ausführungsbeispiel sind lediglich jene Greifzylinder 31 aktiviert, welche den schräggeschnittenen Steinrohling 1 erfassen. Dabei bleiben auch solche Greifzylinder 31 deaktiviert, welche im Bereich der Schnittkante K liegen, um eine Kantenbeschädigung zu vermeiden. Für die Grobeinstellung sind die Greiferwangen 30 in einem Greiferrahmen 33 gelagert und gegeneinander verfahrbar bzw. zusammenfahrbar. Die Greifzylindern 31 können im übrigen außenseitig der Greiferwangen 30 befestigt sein, während die Greiferwangen 30 Bohrungen 34 für die hindurchgeführten Kolbenstangen 35 aufweisen.

## Patentansprüche

1. Anlage zum Herstellen von Steinformlingen, insbesondere Steinformlingen aus Kalksandstein, für die Baustein-Industrie und zum Herstellen von maßgerechten Steinen aus Porenbeton oder dergleichen, mit
- einer Bandsägemaschine (2) für Steinrohlinge und -formlinge (1),
- einer zu der Bandsägemaschine (2) hinführende Transportstraße (3) für die Steinrohlinge bzw. -formlinge (1), und
- einer von der Bandsägemaschine (2) fortführende Transportstraße (4) für auf Maß gesägte Steinrohlinge bzw. -formlinge (1),
dadurch gekennzeichnet, daß
zwischen der Bandsägemaschine (2) und den Transportstraßen (3, 4) Übergabevorrichtungen (28, 29) für die Steinrohlinge bzw. -formlinge (1) angeordnet sind, daß ferner die Bandsägemaschine (2) eine horizontale Bandsäge (5) aufweist und quer zu einem unterhalb der Bandsäge (5) angeordneten Förderer (6) für die Steinrohlinge bzw. -formlinge (1) angeordnet ist, und wobei die Bandsäge (5) um eine Vertikalachse (D) drehbar gelagert und um eine quer zum Förderer (6) verlaufende Schwenkachse (S) in Längsrichtung des Förderers schwenkbar gelagert ist.

2. Anlage nach Anspruch 1, dadurch gekennzeichnet, daß die Bandsäge (5) heb- und senkbar an einer Traverse (7) aufgehängt ist, und daß die Bandsäge (5) in Längsrichtung des Förderers (6) verfahrbar ist.

3. Anlage nach Anspruch 1 oder 2, dadurch gekennzeichnet, daß die Bandsäge (5) in einem Hubschlitten (8) angeordnet ist, daß der Hubschlitten (8) beidseitig in Vertikalführungen (9) geführt ist und daß der Hubschlitten (8) mittels Hubzylindern (10) an die Traverse (7) angeschlossen ist.

4. Anlage nach einem der Ansprüche 1 bis 3, dadurch gekennzeichnet, daß die Vertikalführungen (9) an der Traverse (7) befestigt sind.

5. Anlage nach einem der Ansprüche 1 bis 4, dadurch gekennzeichnet, daß die Bandsägemaschine (2) in einer Brückenkonstruktion mit einem Brückengestell (11) mit beidseitig des Förderers (6) in Fördererlängsrichtung verlaufenden Führungsschienen (12) und einem auf den Führungsschienen (12) verfahrbaren Brückenrahmen (13) aufgehängt ist, daß der Brückenrahmen (13) einen um eine Vertikalachse (D) der Bandsäge (5) arbeitenden Drehantrieb (14) für einen unterhalb des Brückenrahmens (13) angeordneten Brückenträger (15) aufweist, daß der Brückenträger (15) einen Schwenkantrieb (16) für die um ihre Längsachse schwenkbar gelagerte Traverse (7) aufweist, und daß die Traverse (7) an ihren beiden Enden in Lagerwangen (17) des Brückenträgers (15) schwenkbar und mit dem Brückenträger (15) um die durch die Bandsäge (5) führende Vertikalachse drehbar gelagert ist.

6. Anlage nach einem der Ansprüche 1 bis 5, dadurch gekennzeichnet, daß der Drehantrieb (14) unter Zwischenschaltung eines Getriebes (18), zum Beispiel Zahnradgetriebes, auf den Brückenträger (15) arbeitet.

7. Anlage nach einem der Ansprüche 1 bis 6, dadurch gekennzeichnet, daß der Schwenkantrieb (16) unter Zwischenschaltung eines Getriebes (19), zum Beispiel Zahnradgetriebes, auf die Traverse (7) arbeitet.

8. Anlage nach einem der Ansprüche 1 bis 7, dadurch gekennzeichnet, daß der Förderer (6) als Stabförderer mit in vorgegebenen Abständen quer zur Förderrichtung angeordneten und an Förderketten (20) federnd abgestützten Ladestäben (21) ausgebildet ist, und daß im Bereich der Bandsäge (5) beidseitig des Stabförderers (6) programmgesteuerte Niederhalter (22) für die betreffenden Ladestäbe (21) vorgesehen sind, welche die mit einem Steinrohling oder -formling (1) beladenen Ladestäbe (21) im Sägebereich um ein die Schnitttiefe des Sägebandes (23) übersteigendes Maß aus der Ladeebene des Stabförderers (6) absenken und nach dem Sägevorgang wieder freigeben.

9. Anlage nach einem der Ansprüche 1 bis 8, dadurch gekennzeichnet, daß die Förderketten als Laschenketten (20) ausgebildet sind und die Ladestäbe (21) unter Zwischenschaltung von vertikal ausgerichteten Rückstellfedern (24) auf seitlich an die Laschenketten (20) angeschlossen Lagerkonsolen (25), zum Beispiel Lagerwinkeln, abgestützt sind.

10. Anlage nach einem der Ansprüch 1 bis 9, dadurch gekennzeichnet, daß die Niederhalter (22) als vertikal ausgerichtete Zylinderkolbenanordnungen ausgebildet sind und deren Kolbenstangen einen die betreffenden Ladestäbe (21) übergreifenden Mitnehmer (26) aufweisen.

11. Anlage nach einem der Ansprüche 1 bis 10, dadurch gekennzeichnet, daß die Niederhalter (22) außenseitig der Laschenketten (20) angeordnet sind und gegen die Laschenketten (20) sowie Ladestabenden verfahrbar sind.

12. Anlage nach einem der Ansprüche 1 bis 11, dadurch gekennzeichnet, daß die Ladestabenden Aussparungen (27) zum Eingreifen der Mitnehmer (26) bei vorgefahrenen Niederhaltern (22) aufweisen.

13. Anlaqe nach einem der Ansprüche 1 bis 12, dadurch gekennzeichnet, daß das Teilungsverhältnis von Kettenteilung zu Ladestabteilung 3/2 beträgt.

14. Anlage nach einem der Ansprüche 1 bis 13, dadurch gekennzeichnet, daß die Übergabevorrichtungen als heb- und senkbare sowie gegebenenfalls um ihre Vertikalachse (V) drehbar gelagerte Greifer (28, 29) ausgebildet sind, und daß die Greifer (28, 29) über den Stabförderer (6) und die benachbarten Transportstraßen (3, 4) verfahrbar sind.

15. Anlage nach einem der Ansprüche 1 bis 14, dadurch gekennzeichnet, daß die Greifer (28, 29) um eine Horizontalachse (H) verschwenkbar aufgehängt sind.

16. Anlage nach einem der Anssprüche 1 bis 15, dadurch gekennzeichnet, daß der der Bandsägemaschine (2) nachgeordnete Greifer (29) Greiferwangen (30) mit in einem vorgegebenen Raster angeordneten Greifzylindern (31) aufweist, daß die in Greifrichtung vorfahrbaren Kolbenstangen der in orthogonaler Ausrichtung an den Greiferwangen (30) Greifzylinder (31) auf der Wangeninnenseite mit Greiftellern (32) bestückt sind und daß die Greifzylinder (31) programmgesteuert und wahlweise aktivierbar bzw. deaktivierbar sind.

17. Anlage nach einem der Ansprüche 1 bis 16, dadurch gekennzeichnet, daß die Greiferwangen (30) in einem Greiferrahmen (33) gelagert und gegeneinander verfahrbar sind.

## Claims

1. An installation for manufacturing green blocks, particularly sand-lime green blocks, for the building block industry and for the production of dimensionally true blocks of porous concrete or the like, comprising
- a bandsaw machine (2) for block blanks and green blocks (1),
- a conveyor line (3) for the block blanks or green blocks (1), which leads to the bandsaw machine (2), and
- a conveyor line (4) for block blanks or green blocks (1) which are sawn to size, which leads on from the bandsaw machine (2),
characterised in that
transfer devices (28, 29) for the block blanks or green blocks (1) are disposed between the bandsaw machine (2) and the conveyor lines (3, 4), that in addition the bandsaw machine (2) comprises a horizontal bandsaw (5) and is disposed transversely to a conveyor (6) for the block blanks or green blocks (1) which is disposed underneath the bandsaw (5), and wherein the bandsaw (5) is mounted so that it can rotate about a vertical axis (D) and is mounted so that it can swivel in the longitudinal direction of the conveyor about a swivelling axis (S) which extends transversely to the conveyor (6).

2. An installation according to claim 1, characterised in that the bandsaw (5) is suspended on a crosshead (7) so that it can be raised and lowered and that the bandsaw (5) can travel in the longitudinal direction of the conveyor (6).

3. An installation according to claims 1 or 2, characterised in that the bandsaw (5) is disposed in a lifting cradle (8), that the lifting cradle (8) is guided in vertical guides (9) on both sides, and that the lifting cradle (8) is attached to the crosshead (7) by means of lifting cylinders (10).

4. An installation according to any one of claims 1 to 3, characterised in that the vertical guides (9) are fixed to the crosshead (7).

5. An installation according to any one of claims 1 to 4, characterised in that the bandsaw machine (2) is suspended in a bridge construction comprising a bridge stand (11) with guide rails (12) running in the longitudinal direction of conveying on both sides of the conveyor (6) and with a bridge frame (13) which can travel on the guide rails (12), that the bridge frame (13) comprises a rotary drive (14), which acts about a vertical axis (D) of the bandsaw (5), for a bridge support (15) disposed underneath the bridge frame (13), that the bridge support (15) comprises a swivelling drive (16) for the crosshead (7) which is mounted so that it can swivel about its longitudinal axis, and that the crosshead (7) is swivel-mounted at both ends in bearing cheeks (17) of the bridge support (15) and is mounted so that it can rotate with the bridge support (15) about the vertical axis which passes through the bandsaw (5).

6. An installation according to any one of claims 1 to 5, characterised in that the rotary drive (14) acts on the bridge support (15) with gearing (18), for example toothed gearing, interposed therebetween..

7. An installation according to any one of claims 1 to 6, characterised in that the swivelling drive (16) acts on the crosshead (7) with gearing (19), for example toothed gearing, interposed therebetween..

8. An installation according to any one of claims 1 to 7, characterised in that the conveyor (6) is constructed as a bar conveyor comprising loading bars (21) which are disposed at predetermined spacings transverse to the direction of conveying and which are resiliently supported on conveyor chains (20), and that program-controlled holding-down devices (22) for the respective loading bars (21) are provided in the region of the bandsaw (5) on both sides of the bar conveyor (6), which holding-down devices lower the loading bars (21), which are loaded with a block blank or green block (1), out of the loading plane of the bar conveyor (6) in the sawing region by an extent which exceeds the depth of cut of the saw band (23) and release them again after the sawing operation.

9. An installation according to any one of claims 1 to 8, characterised in that the conveyor chains are constructed as flat link chains (20) and the loading bars (21) are supported, with the interposition of vertically aligned return springs (24), on bearing brackets (25), for example bearing angles, which are attached to the flat link chains (20) at the sides.

10. An installation according to any one of claims 1 to 9, characterised in that the holding-down devices (22) are constructed as vertically aligned cylinder-and-piston arrangements, the piston rods of which comprise a catch (26) which fits over the respective loading bars (21).

11. An installation according to any one of claims 1 to 10, characterised in that the holding-down devices (22) are disposed outside the flat-link chains (20) and can travel towards the flat-link chains (20) and towards the ends of the loading bars.

12. An installation according to any one of claims 1 to 11, characterised in that the ends of the loading bars comprise recesses (27) into which the catches (26) fit when the holding-down devices (22) are advanced.

13. An installation according to any one of claims 1 to 12, characterised in that the ratio of the chain pitch to the loading bar pitch is 3/2.

14. An installation according to any one of claims 1 to 13, characterised in that the transfer devices are constructed as grippers (28, 29) which can be raised and lowered and which are optionally mounted so that they can rotate about their vertical axis (V), and that the grippers (28, 29) can travel over the bar conveyors (6) and the adjacent conveying lines (3, 4).

15. An installation according to any one of claims 1 to 14, characterised in that the grippers (28, 29) are suspended so that they can swivel about a horizontal axis (H).

16. An installation according to any one of claims 1 to 15, characterised in that the gripper (29) disposed downstream of the bandsaw machine (2) comprises gripper cheeks (30) with gripper cylinders (31) disposed in a predetermined grid, that the piston rods, which can be advanced in the direction of gripping, of the gripper cylinders (31) which are disposed in orthogonal alignment on the inner faces of the cheeks (30), are equipped with gripper plates (32), and that the gripper cylinders (31) can be alternately activated or deactivated with program-control.

17. An installation according to any one of claims 1 to 16, characterised in that the gripper cheeks (30) are mounted in a gripper frame (33) and can move in relation to each other.

## Revendications

1. Installation pour la fabrication de briques crues, en particulier de briques crues en sable siliceux et chaux, pour l'industrie des produits de construction, ainsi que pour la fabrication de blocs de béton cellulaire et similaire découpés aux dimensions finies, comprenant
- une scie à ruban mécanique (2) pour les ébauches de briques et les briques crues (1),
- une ligne de convoyage d'entrée (3) menant à la scie à ruban mécanique (2) pour les ébauches de briques et les briques crues (1),
- une ligne de convoyage de sortie (4) partant de la scie à ruban mécanique (2) pour les ébauches de briques et les briques crues (1) sciées aux dimensions,
caractérisée par le fait que des dispositifs de transfert (28, 29) pour les ébauches de briques et les briques crues (1) sont disposés entre la scie à ruban mécanique (2) et les lignes de convoyage (3, 4), par le fait qu'en outre la scie à ruban mécanique (2) comporte une scie à ruban horizontale (5) et est disposée transversalement à un convoyeur (6) pour les ébauches de briques ou les briques crues (1), placé au-dessous de la scie à ruban (5), la scie à ruban (5) étant montée tournante autour d'un axe vertical (D) et pivotant dans la direction longitudinale, autour d'un axe de pivotement (S) qui s'étend transversalement au convoyeur (6).

2. Installation selon la revendication 1, caractérisée par le fait que la scie à ruban (5) est suspendue de manière à pouvoir être soulevée et abaissée à une traverse (7) et par le fait que la scie à ruban (5) peut être déplacée dans la direction longitudinale du convoyeur (6).

3. Installation selon la revendication 1 ou 2, caractérisée par le fait que la scie à ruban (5) est montée sur un chariot mobile (8), par le fait que le chariot mobile (8) est guidé des deux côtés dans des glissières (9) verticales et par le fait que le chariot mobile (8) est lié à la traverse (7) par l'intermédiaire de vérin (10).

4. Installation selon une des revendications 1 à 3, caractérisée par le fait que les glissières verticales (9) sont fixées à la traverse (7).

5. Installation selon une des revendications 1 à 4, caractérisée par le fait que la scie à ruban mécanique (2) est suspendue dans une structure de portique qui comprend un bâti de portique (11), avec des rails de guidage (12) qui s'étendent dans la direction longitudinale de convoyage, de chaque côté du convoyeur (6), et un châssis de portique (13) pouvant se déplacer sur les rails de guidage (12), par le fait que le châssis de portique (13) comporte un mécanisme d'entraînement en rotation (14) autour d'un axe vertical (D) de la scie à ruban (5) pour un support de portique (15) disposé au-dessous du châssis de portique (13), par le fait que le support de portique (15) comporte un mécanisme de pivotement (16) pour la traverse (7) qui est montée pivotante autour de son axe longitudinal et par le fait que la traverse (7) est montée pivotante à ses deux extrémités dans des joues formant palier (17) du support de portique (15) et peut tourner avec le support de portique (15) autour de l'axe vertical passant par la scie à ruban (5).

6. Installation selon une des revendications 1 à 5, caractérisée par le fait que le mécanisme d'entraînement en rotation (14) coopère avec le support de portique (15) par l'intermédiaire d'un mécanisme réducteur (18), par exemple d'un réducteur à engrenages.

7. Installation selon une des revendications 1 à 6, caractérisée par le fait que le mécanisme de pivotement (16) coopère avec la traverse (7) par l'intermédiaire d'un mécanisme réducteur (19), par exemple d'un réducteur à engrenages.

8. Installation selon une des revendications 1 à 7, caractérisée par le fait que le convoyeur (6) est réalisé sous la forme d'un convoyeur à barreaux avec des barreaux porte-charge (21) qui sont disposés à distance prédéterminée transversalement à la direction de transport et reposent élastiquement sur des chaînes de convoyeur (20) et par le fait qu'il est prévu dans la région de la scie à ruban (5), de chaque côté du convoyeur à barreaux (6) des dispositifs de blocage (22) commandés par programme pour les barreaux porte-charge (21) concernés, lesquels moyens de blocage, dans la zone de sciage, abaissent les barreaux porte-charge (21) chargés d'une ébauche de brique ou d'une brique crue (1) d'une valeur qui est supérieure à la profondeur de coupe du ruban de scie (23 ) par rapport au plan de chargement du convoyeur à barreaux (6) et libèrent lesdits barreaux après sciage.

9. Installation selon une des revendications 1 à 8, caractérisée par le fait que les chaînes de convoyeur se présentent sous la forme de chaînes articulées (20) et les barreaux porte-charge (21) reposent par l'intermédiaire de ressorts de rappel (24) placés verticalement sur des consoles-supports (25), par exemple sur des équerres-supports, fixées sur le côté des chaînes articulées (20).

10. Installation selon une des revendications 1 à 9, caractérisée par le fait que les moyens de blocage (22) sont agencés sous forme d'ensembles piston-cylindre disposés verticalement, dont les tiges de piston portent un entraîneur (26) qui interfère avec les barreaux porte-charge (21) concernées.

11. Installation selon une des revendications 1 à 10, caractérisée par le fait que les moyens de blocage (22) sont disposés côté extérieur des chaînes articulées (20) et peuvent se déplacer en direction des chaînes articulées (20) et des extrémités des barreaux.

12. Installation selon une des revendications 1 à 11, caractérisée par le fait que les extrémités de barreaux comportent des évidements (27) dans lesquels pénètrent les entraîneurs (26) lorsque les moyens de blocage (22) sont sortis.

13. Installation selon une des revendications 1 à 12, caractérisée par le fait que le rapport de pas entre le pas de la chaîne et le pas des barreaux porte-charge est de 3/2.

14. Installation selon une des revendications 1 à 13, caractérisée par le fait que les dispositifs de transfert sont agencés sous la forme de pinces (28, 29) soulevables et abaissables et éventuellement mobiles en rotation autour de leur axe vertical (V) et par le fait que les pinces (28, 29) peuvent être déplacées au-dessus du convoyeur à barreaux (6) et des lignes de convoyage (3, 4) voisines.

15. Installation selon une des revendications 1 à 14, caractérisée par le fait que les pinces (28, 29) sont suspendues de manière à pouvoir pivoter autour d'un axe horizontal (H).

16. Installation selon une des revendications 1 à 15, caractérisée par le fait que la pince (29) associée à la scie à ruban mécanique (2) comporte des joues (30) pourvues de vérins de serrage (31) disposés selon un motif prédéterminé, par le fait que les tiges de piston qui peuvent être sorties dans la direction de serrage des vérins de serrage (31) disposés orthogonalement sur les joues de pince (30) sont pourvues de plateaux (32) côté face intérieure des joues et par le fait que les vérins de serrage (31) peuvent être activés et désactivés de manière sélective grâce à une commande par programme.

17. Installation selon une des revendications 1 à 16, caractérisée par le fait que les joues de serrage (30) sont montées dans dans un châssis de pince (33) et peuvent être déplacées en direction l'une de l'autre.
